# EUROPÄISCHE PATENTSCHRIFT

(11) **EP 0 750 556 B1**
(45) Veröffentlichungstag und Bekanntmachung des Hinweises auf die Patenterteilung: **29.12.1997**
(21) Anmeldenummer: 95912166.6
(22) Anmeldetag: 27.02.1995
(51) Int. Cl.: B60T 13/565

(54) **BETÄTIGUNGSBAUGRUPPE FÜR EINE KRAFTFAHRZEUG-BREMSANLAGE**
ACTUATING UNIT FOR A MOTOR VEHICLE BRAKING SYSTEM
GROUPE D'ACTIONNEMENT POUR SYSTEME DE FREINAGE DE VEHICULE AUTOMOBILE

(30) Priorität: 16.03.1994 DE 4408993
(43) Veröffentlichungstag der Anmeldung: 02.01.1997
(73) Patentinhaber: LUCAS INDUSTRIES PUBLIC LIMITED COMPANY, Solihull, West Midlands B91 3TX (GB)
(72) Erfinder: SCHLÜTER, Peter, D-56206 Kammerforst (DE); ZINDORF, Albert, D-56237 Sessenbach (DE); SCHNORR, WERNER, D-56077 Koblenz (DE)
(74) Vertreter: Goetz, Rupert, Dipl.-Ing.
(86) Internationale Anmeldenummer: EP9500704
(87) Internationale Veröffentlichungsnummer: WO9525029

(56) Entgegenhaltungen:
- GB-A- 2 049 086
- GB-A- 2 077 868
- US-A- 3 172 335

## Beschreibung

Die Erfindung betrifft eine Betätigungsbaugruppe nach dem Oberbegriff des Anspruchs 1.

Bei einer bekannten Betätigungsbaugruppe dieser Gattung (DE 33 18 272 A1) ragt die am Ventilgehäuse starr befestigte Hülse nur geringfügig in den rohrförmigen Fortsatz des Primärkolbens hinein. Das Kopfstück der Hülse hat somit einen erheblichen axialen Abstand von der am Primärkolben ausgebildeten Abstützung für das Kraftabgabeglied. Achsfluchtungsfehler, die bei Herstellung und Zusammenbau der im Oberbegriff des Anspruchs 1 genannten Teile einer Betätigungsbaugruppe nicht ganz zu vermeiden sind, führen bei dieser bekannten Anordnung dazu, daß der rohrförmige Fortsatz des Primärkolbens mit Biegemomenten belastet wird. Dies ist zwar insofern unschädlich als der rohrförmige Fortsatz genügend kräftig bemessen werden kann, um selbst erheblichen Biegemomenten standzuhalten. Es ist aber bisher unbeachtet geblieben, daß ein Achsfluchtungsfehler zwischen dem Kraftabgabeglied und dem Primärkolben des Hauptbremszylinders in Verbindung mit solchen Biegemomenten bewirken kann, daß der Primärkolben erheblich mit Querkräften belastet und infolgedessen in seiner Axialbeweglichkeit behindert und vorzeitig verschlissen wird.

Bei einer anderen bekannten Betätigungsbaugruppe (DE 32 22 929 A1) mit einem pneumatischen Bremskraftverstärker, an dessen Gehäuse von vorne her ein Hauptbremszylinder angebaut ist, erstreckt sich das Kraftabgabeglied frei beweglich durch eine Mittel-bohrung eines Kappenteils, das auf einen ringförmigen vorderen Ansatz einer Haltescheibe aufgesetzt ist, welche zur axialbeweglichen Zwischenwand des Kraftverstärkers gehört. Durch dieses Kappenteil ist der Abgabekolben des Kraftübersetzers in einer ihn aufnehmenden Aussparung der genannten Scheibe festgehalten.

Der Erfindung liegt die Aufgabe zugrunde, bei einer Betätigungsbaugruppe für eine Kraftfahrzeug-Bremsanlage mit einem pneumatischen Bremskraftverstärker und einem hydraulischen Hauptbremszylinder dafür zu sorgen, daß die zur Übertragung und Verstärkung von Axialkräften vorgesehenen Bauteile auch dann, wenn sie von Anfang an nicht ganz genau miteinander fluchten, nur mit geringen Querkräften und Biegemomenten belastet werden.

Die Aufgabe ist erfindungsgemäß mit den Merkmalen des Anspruchs 1 gelöst. Eine Vorteilhafte Weiterbildung ergibt sich aus dem Unteranspruch.

Ausführungsbeispiele der Erfindung werden im Folgenden anhand schematischer Zeichnungen mit weiteren Einzelheiten erläutert. Es zeigen:
- Fig. 1: eine erfindungsgemäße Betätigungsbaugruppe in einem axialen Schnitt,
- Fig. 2: einen vergrößerten Ausschnitt aus Fig. 1,
- Fig. 3: einen entsprechenden Ausschnitt bei einem maximalen Achsfluchtungsfehler,
- Fig. 4: eine gegenüber Fig. 2 abgewandelte Ausführungsform und
- Fig. 5: eine weitere Abwandlung von Fig. 2.

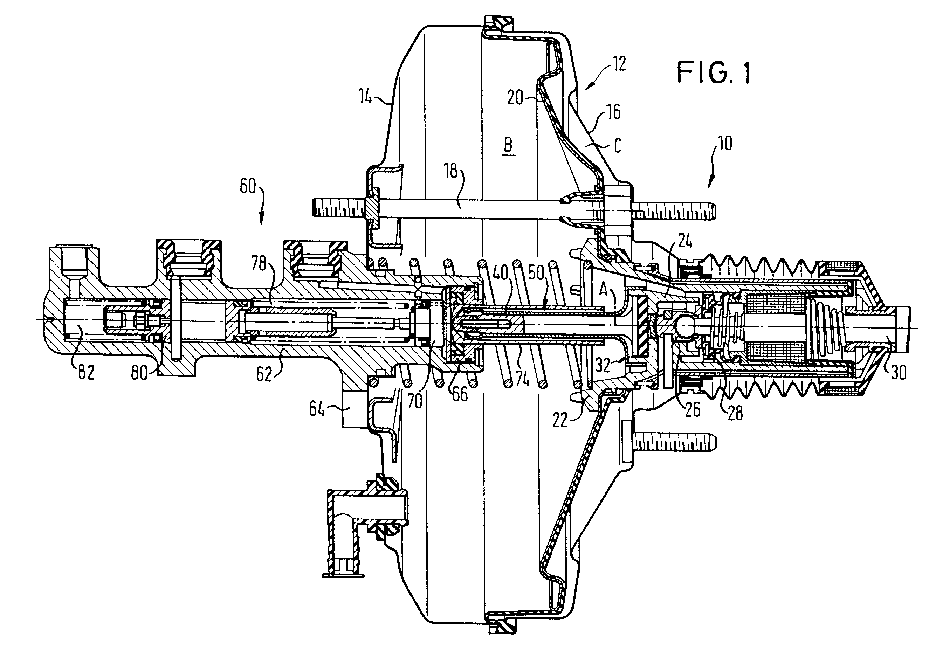

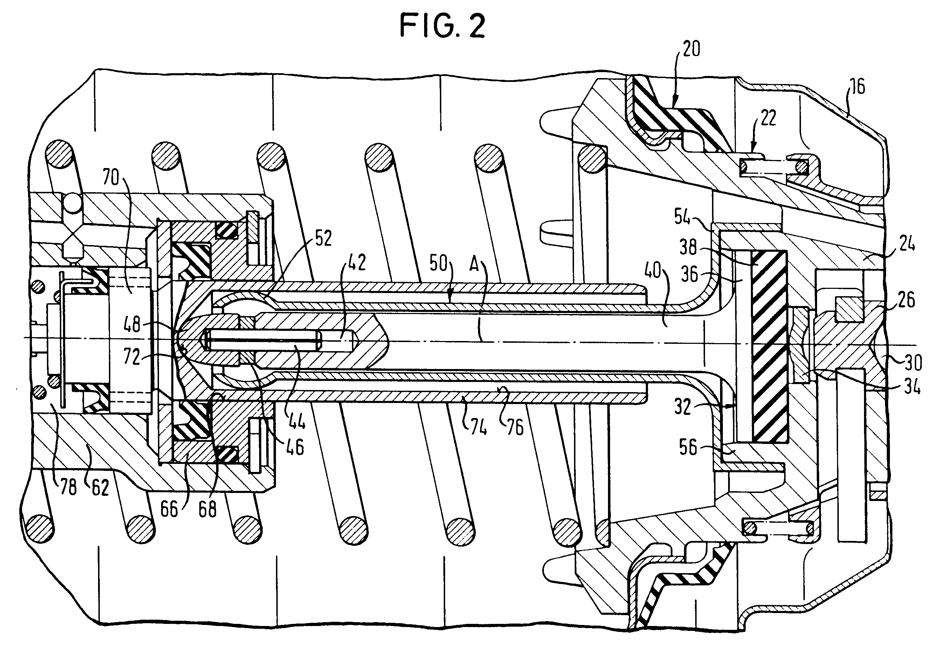

Zu der in Fig. 1 und 2 dargestellten Baugruppe gehört ein pneumatischer Bremskraftverstärker von im wesentlichen üblicher Bauweise, der in Bezug auf eine Achse A im wesentlichen rotationssymmetrisch ist. Der Bremskraftverstärker 10 hat ein Verstärkergehäuse 12 aus einem vorderen Gehäuseteil 14 und einem hinteren Gehäuseteil 16, die durch achsparallele Zuganker 18 zusammengehalten sind und einen Raum umschließen, der durch eine axial bewegliche Zwischenwand 20 in eine vordere und eine hintere Kammer B bzw. C unterteilt ist. Die vordere Kammer B ist im Betrieb ständig an eine Unterdruckquelle, beispielsweise Saugleitung eines Ottomotors, angeschlossen; die hintere Kammer C läßt sich durch ein Steuerventil wahlweise mit der vorderen Kammer B oder mit der umgebenden Atmosphäre, gegebenenfalls auch mit einer Druckluftquelle, verbinden.

Das Steuerventil ist von ebenfalls bekannter Bauart; seine wichtigsten Bauteile sind ein Ventilgehäuse 22 mit einem zentralen Körper 24, an dem ein radial äußerer, ringförmiger Ventilsitz ausgebildet ist, ein Ventilkolben 26, an dem ein radial innerer ringförmiger Ventilsitz ausgebildet ist, und ein Dichtkörper 28, der mit den beiden Ventilsitzen zusammenwirkt. Zum Betätigen des Ventilkolbens 26 ist von hinten her in das Ventilgehäuse 22 ein stangenförmiges Krafteingabeglied 30 eingeführt. Vor dem Ventilkolben 26 ist ein mechanischer Kraftübersetzer 32 angeordnet, der einen Eingabekolben 34 kleineren Durchmessers, einen Abgabekolben 36 größeren Durchmessers und eine zischen diesen beiden Kolben angeordnete Reaktionsscheibe 38 aus gummielastichen Material aufweist. Beim Betätigen des Krafteingabegliedes 30 vergrößert der mechanische Kraftübersetzer 32 die Eingangskraft im Verhältnis der an der Reaktionsscheibe anliegenden Flächen des Abgabekolbens 36 und des Eingabekolbens 34.

Der Abgabekolben 36 wirkt mit einem stangenförmigen Kraftabgabeglied 40 zusammen, an dessen hinterem Ende er im dargestellten Beispiel einstückig ausgebildet ist. Das Kraftabgabeglied 40 hat weiter vorne eine axiale Bohrung 42, in der mit einem Kerbstift 44 oder einem ähnlichen Befestigungsmittel ein Distanzring 46 und ein vorne sphärisch abgerundetes Endstück 48 befestigt sind.

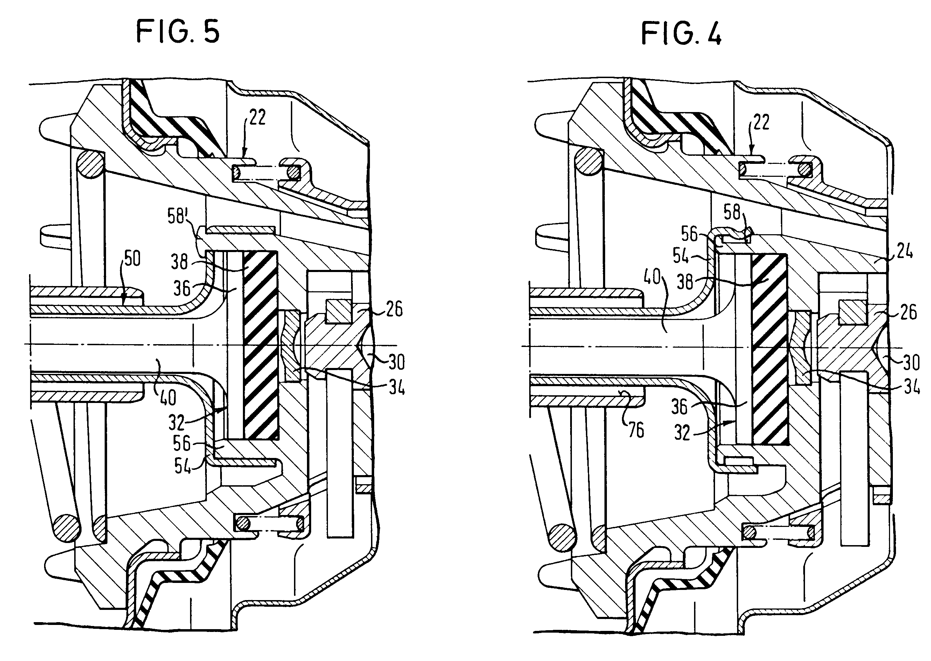

Das Kraftabgabeglied 40 ist nahezu auf seiner gesamten Länge von einer Hülse 50 in radialem Abstand umschlossen. Die Hülse 50 endet vorne mit einem sphärischen Kopfstück 52 und hinten mit einem topfförmigen Fuß 54, der einen nach vorne ragenden ringfförmigen Ansatz 56 des zentralen Körpers 24 des Ventilgehäuses 22 spielfrei umschließt. Gemäß Fig. 1 bis 3 bildet der Fuß 54 mit dem von ihm umschlossenen ringförmigen Ansatz 56 einen Preßsitz. Gemäß Fig. 4 weist der Ansatz 56 an seiner Außenseite eine Ringnut 58 auf, in die radial nach innen gerichtete Verformungen des Fußes 54 eingreifen. Gemäß Fig. 5 sind am ringförmigen Ansatz 56 achsparallele Vorsprünge 58' ausgebildet, die sich durch je ein Loch im topfförmigen Fuß 54 hindurch nach vorne erstrecken und dessen Vorderseite verstemmt sind. Die Ringnut 58 und die Vorsprünge 58' bilden zusätzliche Sicherungen gegen ein axiales Abrutschen des topfförmigen Fußes 54 vom ringförmigen Ansatz 56. Im allgemeinen ist jedoch der Preßsitz des topfförmigen Fußes 54 auf dem ringförmigen Ansatz 56 so fest, daß beide sich ohnehin nicht voneinander trennen können.

Im Prinzip gleichachsig mit dem Bremskraftverstärker 10 ist ein Hauptbremszylinder 60 angeordnet, der ein Hauptzylindergehäuse 62 mit einem Flansch 64 aufweist. Der Flansch 64 ist auf die Zuganker 18 aufgesteckt und mit nicht dargestellten Muttern in der abgebildeten Stellung festgehalten, in der sich das Hauptzylindergehäuse 62 axial in das Verstärkergehäuse 12 hineinerstreckt. Der innerhalb des Verstärkergehäuses 12 angeordnete hintere Endbereich des Hauptzylindergehäuses 62 enthält einen fest und dicht eingebauten Abschlußring 66 mit einer zentralen Bohrung, die eine axiale Führung 68 bildet. Vor dem Abschlußring 66 ist im Hauptzylindergehäuse 62 ein Primärkolben 70 geführt, der an seiner Rückseite eine pfannenförmige Abstützung 72 aufweist. In diese greift das vordere Endstück 48 des Kraftabgabegliedes 40 ein. Der Distanzring 46 ist so bemessen, daß das vordere Endstück 48 in der abgebildeten Ruhestellung des Primärkolbens 70 spielfrei in dessen pfannenförmiger Abstützung 72 liegt und dadurch auch zentriert ist.

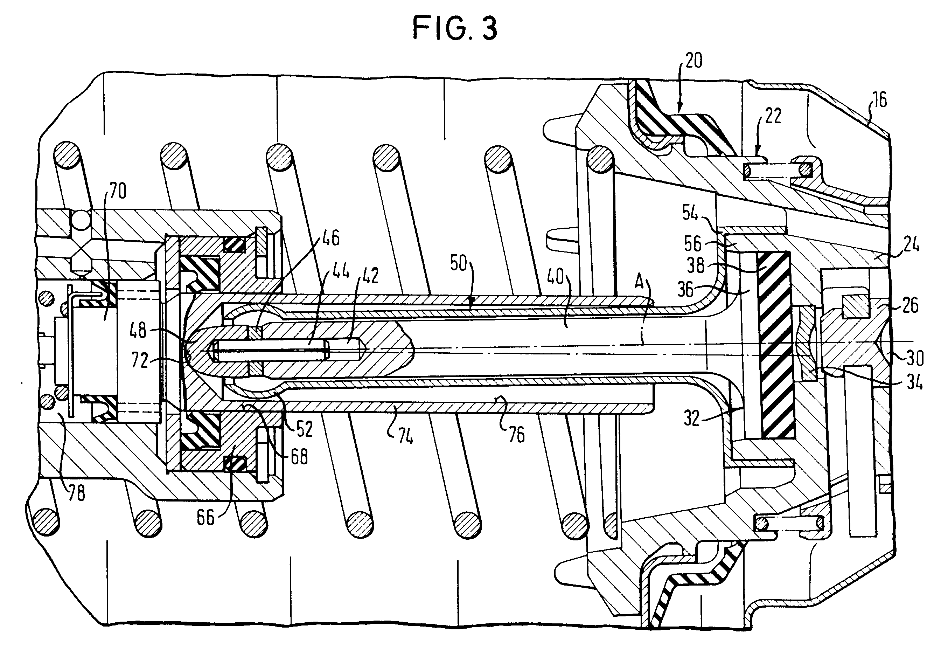

Der Primärkolben 70 hat einen rohrförmigen Fortsatz 74, der sich von der pfannenförmigen Abstützung 72 aus axial nach hinten erstreckt und erst kurz vor dem topfförmigen Fuß 54 und dem Kraftübersetzer 32 endet. Der Fortsatz 74 hat eine kreiszylindrische Innenfläche 76, an der das sphärische Kopfstück 52 der Hülse 50 geführt ist. Das Kopfstück 52 ist in einem nur geringen Abstand hinter der pfannenförmigen Abstützung 72 innerhalb des von der Führung 68 umschlossenen Raumes angeordnet und ist normalerweise der einzige Bereich der Hülse 50, der den rohrförmigen Fortsatz 74 des Primärkolbens 70 berührt. Zwischen dem Hauptteil der Hülse 50 und der Innenfläche 76 des Fortsatzes 74 bleibt also, wie vorallem aus Fig. 2, 4 und 5 ersichtlich ist, normalerweise ein Ringraum frei. Wenn jedoch zwischen dem Kraftabgabeglied 40 und dem Primärkolben 70 ein Achsfluchtungsfehler auftritt, wird dieser gemäß Fig. 3 auf eine unschädliche Größe dadurch begrenzt, daß die Hülse 50 gegen den hinteren Randbereich des rohrförmigen Fortsatzes 54 stößt und dadurch zusätzlich geführt wird.

Gemäß Fig. 1 ist der Hauptbremszylinder 60 für eine Zweikreis-Bremsanlage vorgesehen. Dementsprechend ist im Hauptzylindergehäuse 62 vor den Primärkolben 70, durch einen Primärdruckraum 78 von ihm getrennt, ein Sekundärkolben 80 angeordnet, der einen Sekundärdruckraum 82 begrenzt. Eine solche Tandemanordnung gehört jedoch nicht zu den notwendigen Voraussetzungen für die beschriebene Gestaltung der Hülse 50 und der mit ihr unmittelbar zusammenwirkenden Bauteile. Der Primärkolben 70 ist deshalb unabhängig von der Anzahl vorgesehener Bremskreise als derjenige Kolben zu verstehen, der dazu vorgesehen ist, eine vom Kraftabgabeglied 40 auf ihn ausgeübte Kraft in einen hydraulischen Druck umzusetzen.

## Patentansprüche

1. Betätigungsbaugruppe für eine Kraftfahrzeug-Bremsanlage, bei der ein pneumatischer Bremskraftverstärker (10) und ein hydraulischer Hauptbremszylinder (60) längs einer gemeinsamen Achse (A) hintereinander angeordnet sind, mit
- einem Verstärkergehäuse (12), in dem eine axial bewegliche Zwischenwand (20) zwei an Quellen unterschiedlichen Druckes anschließbare Kammern (B,C) voneinander trennt,
- einem Ventilgehäuse (22), das mit der Zwischenwand (20) zu gemeinsamer Axialbewegung verbunden ist,
- einem Krafteingabeglied (30) und einem Kraftabgabeglied (40), die in Bezug auf das Verstärkergehäuse (12) und das Ventilgehäuse (22) axial verschiebbar sind,
- einem mechanischen Kraftübersetzer (32), der zwischen Krafteingabeglied (30) und Kraftabgabeglied (40) angeordnet ist und einen Eingabekolben (34) kleineren Durchmessers, einen Abgabekolben (36) größeren Durchmessers sowie eine zwischen diesen Kolben angeordnete gummielastische Reaktionsscheibe (38) aufweist,
- einem Hauptzylindergehäuse (62), das am Verstärkergehäuse (12) befestigt ist und eine dem Kraftübersetzer (32) zugewandte Führung (68) aufweist,
- einem Primärkolben (70), der im Hauptzylindergehäuse (62) geführt ist und eine Abstützung (72) für das Kraftabgabeglied (40) sowie einen sich in Richtung zum Kraftübersetzer (32) erstreckenden rohrförmigen Fortsatz (74) aufweist, der in der genannten Führung (68) geführt ist, und
- einer Hülse (50), die am Ventilgehäuse (22) starr befestigt ist, einen Abschnitt des Kraftabgabegliedes (40) mit radialem Abstand umschließt, und ein Kopfstück (52) aufweist, das an einer Innenfläche (76) des Fortsatzes (74) geführt ist,
dadurch **gekennzeichnet**, daß die Hülse (50) sich bis in die Nähe der am Primärkolben (70) ausgebildeten Abstützung (72) erstreckt und das Kopfstück (52) innerhalb der von der genannten Führung (68) umschlossenen Raumes angeordnet ist.

2. Betätigungsbaugruppe nach Anspruch 1,
dadurch **gekennzeichnet**, daß die Hülse (50) einen topfförmigen Fuß (54) aufweist, der einen ringförmigen Ansatz (56) des Ventilgehäuses (22) spielfrei umschließt und auch den Kraftübersetzer (32) umschließt.

## Claims

1. An actuation assembly for a braking system of a motor vehicle, wherein a pneumatic brake booster (10) and a hydraulic master cylinder (60) are arranged in series along a common axis (A), comprising
- a booster housing (12) in which an axially movable intermediate wall (20) separates two chambers (B, C) which are connectable to two sources of different pressure;
- a valve housing (22) which is connected to the intermediate wall (20) for common axial movement;
- a power input member (30) and a power output member (40) which are axially movable with respect to the booster housing (12) and the valve housing (22);
- a mechanical power transmitter (32) which is arranged between the power input member (30) and the power output member (40) and which comprises an input piston (34) of a smaller diameter, an output piston (36) of a larger diameter, and a reaction disk (38) of rubber elastic material arranged between these pistons;
- a master cylinder housing (62) which is attached at the booster housing (12) and comprises a guide (68) facing the power transmitter (32);
- a primary piston (70) which is guided in the master cylinder housing (62) and which comprises a support (72) for the power output member (40) as well as a tubular extension (74) which extends towards the power transmitter (32) and which is guided in said guide (68) and
- a sleeve (50) which is rigidly attached at the valve housing (22), encloses a portion of the power output member (40) in a radial distance and has a head portion (52) which is guided along an inner surface (76) of the extension (74),
characterized in that the sleeve (50) extends to near the support (72) formed at the primary piston (70) and the head portion (52) is arranged within the space enclosed by said guide (68).

2. An actuation assembly according to Claim 1,
characterized in that the sleeve (50) comprises a pot-shaped foot (54) which encloses an annular rim (56) of the valve housing (22) in a clearance-free manner and also encloses the power transmitter (32).

## Revendications

1. Groupe d'actionnement pour système de freinage de véhicule automobile dans lequel un amplificateur de freinage pneumatique (10) et un maître cylindre hydraulique de frein (60) sont disposés l'un derrière l'autre le long d'un axe commun (A), comprenant
- un boîtier d'amplificateur (12) dans lequel une paroi intermédiaire (20) mobile axialement sépare l'une de l'autre deux chambres (B, C) pouvant être raccordées à deux sources de pressions différentes,
- un boîtier de soupape (22) qui est relié à la paroi intermédiaire (20) pour un déplacement axial commun,
- un élément d'introduction de force (30) et un élément de transmission de force (40) qui peuvent coulisser axialement par rapport au boîtier d'amplificateur (12) et au boîtier de soupape (22),
- un convertisseur de force mécanique (32) qui est disposé entre l'élément d'introduction de force (30) et l'élément de transmission de force (40) et présente un piston d'introduction (34) de plus petit diamètre, un piston de transmission (36) de plus grand diamètre ainsi qu'un disque de réaction (38) élastique disposé entre ces pistons,
- un boîtier de maître cylindre (62) qui est fixé au boîtier d'amplificateur (12) et présente un guide (68) tourné vers le convertisseur de force (32),
- un piston primaire (70) qui est guidé dans le boîtier du maître cylindre (62) et présente un appui (72) pour l'élément de transmission de force (40) ainsi qu'un prolongement (74) tubulaire s'étendant en direction du convertisseur de force (32), qui est guidé dans ledit guide (68), et
- un manchon (50) qui est fixé rigidement au boîtier de soupape (22), entoure une portion de l'élément de transmission de force (40) avec un espacement radial, et présente une portion de tête (52) qui est guidée sur une surface intérieure (76) du prolongement (74),
caractérisé en ce que le manchon (50) s'étend jusqu'à proximité de l'appui (72) formé sur le piston primaire (70) et en ce que la portion de tête (52) est disposée à l'intérieur du volume entouré par ledit guide (68).

2. Groupe d'actionnement selon la revendication 1,
caractérisé en ce que le manchon (50) présente un pied (54) en forme de pot qui entoure sans jeu une pièce rapportée de forme annulaire (56) du boîtier de soupape (22) et entoure aussi le convertisseur de force (32).
